(19) Europäisches Patentamt
European Patent Office
Office européen des brevets

(11) **EP 1 469 418 A2**

(12) **EUROPEAN PATENT APPLICATION**

(43) Date of publication:
**20.10.2004 Bulletin 2004/43**

(51) Int Cl.⁷: **G06K 9/20**

(21) Application number: **04002039.8**

(22) Date of filing: **30.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.01.2003 KR 2003006418**

(71) Applicant: **Samsung Electronics Co., Ltd.**
**Suwon-si, Gyeonggi-do (KR)**

(72) Inventors:
• **Lim, Chae-Whan**
  **Yeongtong-gu Suwon-Si Gyeonggi-do (KR)**

• **Jang, Ick-Hoon**
  **Yeongtong-gu Suwon-Si Gyeonggi-do (KR)**
• **Kim, Nam-Chul**
  **Yeongtong-gu Suwon-Si Gyeonggi-do (KR)**
• **Park, Jun-Hyo**
  **Yeongtong-gu Suwon-Si Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Device and method for extending character region in image**

(57) Disclosed is a device for extending a character region in an image. The device comprises an input part for receiving an input image; a block classification part for classifying the input image into character blocks and background blocks, and converting pixels in the character blocks into pixels having a first brightness value and pixels in the background blocks into pixels having a second brightness value; a position search part for searching for left, right, top and bottom positions of a character region by horizontally and vertically scanning the block-classified image, and determining a position of the character region; an ROC (Region Of Contents) extraction part for extracting an image in the determined position of the character region from the input image; and an ROC extension part for extending the extracted image of the character region to a size of the input image.

FIG.1

**Description**

BACKGROUND OF THE INVENTION

1. Field of the Invention

The present invention relates generally to a preprocessing device and method for recognizing image characters, and in particular, to a device and method for extending a character region in an image.

2. Description of the Related Art

Generally, a preprocessing operation is performed to recognize image characters. The "preprocessing operation" means an operation of processing an image before recognition of characters in the image. The image preprocessing operation can include an operation of deciding whether or not an input image is appropriate for character recognition, an operation of correcting a skew of an object in an input image, an operation of properly correcting a size of an input image, and an operation of binarizing an image signal so that characters of the image signal can be recognized.
A device for recognizing image characters generally recognizes characters from an image. The image is divided into a character region and a background region, and no character is arranged in the background region. For example, assuming that a document to be subject to character recognition is a business card, an input image becomes an image of the business card. The input image includes a background region outside the business card. In this case, it is possible to improve character recognition performance by extending a size of the image after removing the background region from the image. In addition, it is general that no character region is included even in edges of the business card. Therefore, it is possible to improve recognition performance by searching for a position of a character region in a business card, removing regions other than the character region according to the search results, and then extending the character region by a percentage of the removed regions. Storing such preprocessed image contributes to in an increase in memory efficiency.

SUMMARY OF THE INVENTION

It is, therefore, an object of the present invention to provide a device and method for removing a background region from an image and then extending a character region in an image signal processing device.
It is another object of the present invention to provide a device and method for searching for a position of a character region in an image and removing regions outside the character region in an image signal recognition device.
It is further another object of the present invention to provide a device and method for searching for a position of a character region in an image, removing regions outside the character region, and then extending the character region in an image signal recognition device.
In accordance with one aspect of the present invention, there is provided a device for extending a character region in an image. The device comprises an input part for receiving an input image; a block classification part for classifying the input image into character blocks and background blocks, and converting pixels in the character blocks into pixels having a first brightness value and pixels in the background blocks into pixels having a second brightness value; a position search part for searching for left, right, top and bottom positions of a character region by horizontally and vertically scanning the block-classified image, and determining a position of the character region; an ROC (Region Of Contents) extraction part for extracting an image in the determined position of the character region from the input image; and an ROC extension part for extending the extracted image of the character region to a size of the input image.
In accordance with another aspect of the present invention, there is provided a device for extending a character region in an image. The device comprises an input part for receiving an input image; a block classification part for classifying the input image into character blocks and background blocks, and converting pixels in the character blocks into pixels having a first brightness value and pixels in the background blocks into pixels having a second brightness value; a median filter for performing median filtering on an image output from the block classification part to remove blocks erroneously classified as character blocks; a position search part for searching for left, right, top and bottom positions of a character region by horizontally and vertically scanning the median-filtered image, and determining a position of the character region; an ROC (Region Of Contents) extraction part for extracting an image in the determined position of the character region from the input image; and an ROC extension part for extending the extracted image of the character region to a size of the input image.
In accordance with further another aspect of the present invention, there is provided a device for extending a character region in an image. The device comprises an input part for receiving an input image; a mean filter for performing mean filtering on the input image to blur the input image; a clock classification part for classifying the mean-filtered image into character blocks and background blocks, and converting pixels in the background blocks into pixels having a first brightness value and pixels in the background blocks into pixels having a second brightness value; a median filter for performing median filtering on an image output from the block classification part to remove blocks erroneously classified as character blocks; a position search part for searching for left, right, top and bottom positions of a character region by horizontally and vertically scanning the median-filtered image, and determining a position of the character region; an ROC (Region Of Contents) extraction part for extracting an image in the determined position of the character region from the input image; and an ROC extension part for extending the extracted image of the character region to a size of the input image.

In accordance with further another aspect of the present invention, there is provided a device for extending a character region in an image. The device comprises an input part for receiving an input image; a mean filter for performing mean filtering on the input image to blur the input image; a block classification part for classifying the mean-filtered image into character blocks and background blocks, and converting pixels in the character blocks into pixels having a first brightness value and pixels in the background blocks into pixels having a second brightness value; a subsampling part for subsampling pixels in the image output from the block classification part to reduce the number of the pixels; a median filter for performing median filtering on the subsampled image to remove blocks erroneously classified as character blocks; an interpolation part for performing interpolating on the median-filtered image to extend the median-filtered image to a size of the input image; a position search part for searching for left, right, top and bottom positions of a character region by horizontally and vertically scanning the block-classified image, and determining a position of the character region; an ROC (Region Of Contents) extraction part for extracting an image in the determined position of the character region from the input image; and an ROC extension part for extending the extracted image of the character region to a size of the input image.

In accordance with still another aspect of the present invention, there is provided a method for extending a character region in an image. The method comprises the steps of: receiving an input image; classifying the input image into character blocks and background blocks, and converting pixels in the character blocks into pixels having a first brightness value and pixels in the background blocks into pixels having a second brightness value; searching for left, right, top and bottom positions of a character region by horizontally and vertically scanning the block-classified image, and determining a position of the character region; extracting an image in the determined position of the character region from the input image; and extending the extracted image of the character region to a size of the input image.

In accordance with still another aspect of the present invention, there is provided a method for extending a character region in an image. The method comprises the steps of: receiving an input image; classifying the input image into character blocks and background blocks, and converting pixels in the character blocks into pixels having a first brightness value and pixels in the background blocks into pixels having a second brightness value; performing median filtering on the block-classified image to remove blocks erroneously classified as character blocks; searching for left, right, top and bottom positions of a character region by horizontally and vertically scanning the median-filtered image, and determining a position of the character region; extracting an image in the determined position of the character region from the input image; and extending the extracted image of the character region to a size of the input image.

In accordance with still another aspect of the present invention, there is provided a method for extending a character region in an image. The method comprises the steps of: receiving an input image; performing mean filtering on the input image to blur the input image; classifying the mean-filtered image into character blocks and background blocks, and converting pixels in the background blocks into pixels having a first brightness value and pixels in the background blocks into pixels having a second brightness value; performing median filtering on the block-classified image to remove blocks erroneously classified as character blocks; searching for left, right, top and bottom positions of a character region by horizontally and vertically scanning the median-filtered image, and determining a position of the character region; extracting an image in the determined position of the character region from the input image; and extending the extracted image of the character region to a size of the input image.

In accordance with still another aspect of the present invention, there is provided a method for extending a character region in an image. The method comprises the steps of: receiving an input image; performing mean filtering on the input image to blur the input image; classifying the mean-filtered image into character blocks and background blocks, and converting pixels in the character blocks into pixels having a first brightness value and pixels in the background blocks into pixels having a second brightness value; subsampling pixels in the block-classified image to reduce the number of the pixels; performing median filtering on the subsampled image to remove blocks erroneously classified as character blocks; performing interpolating on the median-filtered image to extend the median-filtered image to a size of the input image; searching for left, right, top and bottom positions of a character region by horizontally and vertically scanning the block-classified image, and determining a position of the character region; extracting an image in the determined position of the character region from the input image; and extending the extracted image of the character region to a size of the input image.

BRIEF DESCRIPTION OF THE DRAWINGS

The above and other objects, features and advantages of the present invention will become more apparent from the following detailed description when taken in conjunction with the accompanying drawings in which:

| | |
|---|---|
| FIG. 1 | is a block diagram illustrating a structure of a device for extending a character region in an image according to a first embodiment of the present invention; |
| FIG. 2 | is a block diagram illustrating a structure of a device for extending a character region in an image according to a second embodiment of the present invention; |
| FIG. 3 | is a block diagram illustrating a detailed structure of the block classification part of FIGs. 1 and 2 in accordance with an embodiment of the present invention; |
| FIG. 4A to FIG. 4C | are diagrams illustrating a characteristic for determining a sum of absolute values of DCT coefficients in each block; |
| FIG. 5 | is a flowchart illustrating a procedure for extending a character region in an image according to a first embodiment of the present invention; |
| FIG. 6 | is a flowchart illustrating a procedure for extending a character region in an image according to a second embodiment of the present invention; |
| FIG. 7 | is a flowchart illustrating a detailed procedure of the block classification process of FIGs. 5 and 6 in accordance with an embodiment of the present invention; |
| FIG. 8 | is a flowchart illustrating a detailed procedure of the position search process of FIGs. 5 and 6 in accordance with an embodiment of the present invention; |
| FIG. 9 | is a flowchart illustrating a procedure for extending a character region in an image according to an embodiment of the present invention; and |
| FIGs. 10A to 10H | are diagrams illustrating images generated in the procedure of FIG. 9. |

DETAILED DESCRIPTION OF THE PREFERRED EMBODIMENT

In the following description, specific details such as a size of an image and sizes of character and background blocks are provided for a better understanding of the present invention. It would be obvious to those skilled in the art that the invention can be easily implemented without such specific details or by modifying the same.

In embodiments of the present invention, an input image is assumed to have a size of 640x480 pixels. The term "block" means character and background blocks, and it is assumed herein that each of the blocks has a size of 8x8 pixels. In addition, the term "outside region" refers to unwanted regions other than a character region in the image.

Preferred embodiments of the present invention will now be described in detail with reference to the annexed drawings.

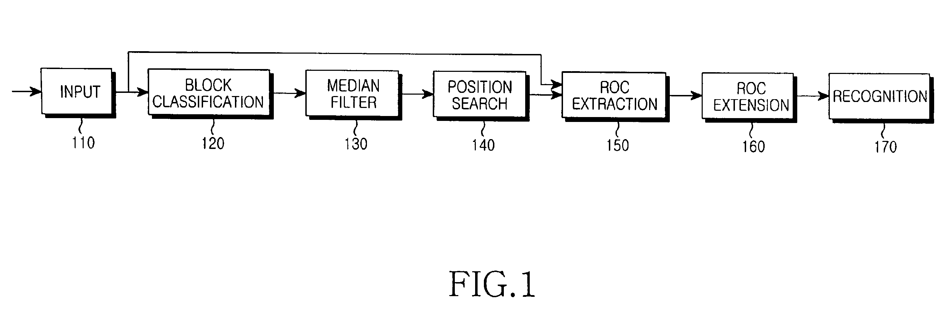

FIG. 1 is a block diagram illustrating a structure of a device for extending a character region in an image according to a first embodiment of the present invention. Referring to FIG. 1, an input part 110 has a function of receiving an input image. Here, a camera, a scanner, a communication interface including a modem and a network, and a computer can serve as the input part 110. It is assumed herein the input image is comprised of 640 (column) x 480 (row) pixels.

A block classification part 120 divides the input image received from the input part 110 into blocks having a preset block size, classifies the divided blocks into character blocks arid background blocks by analyzing pixels included in the divided blocks, and then converts pixels in the classified character blocks into pixels having a specific value.

A median filter 130 performs median filtering on an image output from the block classification part 120 thus to remove a character region erroneously classified by edges or noises from the mage. That is, the image after being subject to block classification can include isolated character blocks generated by edges or noises. The median filter 130 has a function of removing character blocks (isolated character blocks) erroneously classified by the noises in the block classification process.

A position search part 140 horizontally and vertically scans the median-filtered image and searches for a position of the character region. The position search part 140 horizontally scans the median-filtered image and searches for a point x1 at the leftmost character block and a point x2 at the rightmost character block. Furthermore, the position search part 140 vertically scans the median-filtered image, and searches for a pointy1 at the topmost character block and a point y2 at the bottommost character block. A position of the character region in the image is determined according to a result of the search. In this case, left top and right bottom points of the character region are (x1, y1) and (x2, y2). The left top and right bottom points (x1, y1) and (x2, y2) of the character region are based on an aspect ratio of the input image, such that distortion of the image can be prevented when an ROC (Region-Of-Contents) extension part 160 extends the image.

An ROC extraction part 150 extracts an image of the character region searched by the position search part 140. In other words, the ROC extraction part 150 receives information associated with the left top and right bottom points (x1, y1) and (x2, y2) of the character region searched by the position search part 140, and extracts an image located between the left top and right bottom points (x1, y1) and (x2, y2) of the character region from the input image output from the input part 110. Accordingly, an output image from the ROC extraction part 150 becomes an image of the character region in which a background region is removed from the input image.

The ROC extension part 160 extends the image of the extracted character region to a size of the input image. The image extension can be implemented by interpolation. It is assumed herein that the image extension is implemented by bilinear interpolation. Here, the image extension is achieved by the interpolation operation so that a size of the image of the extracted character region can be equal to that of the input image.

A recognition part 170 accesses the extended image and recognizes characters from the accessed image.

Operation of the device for extending a character region according to the first embodiment of the present invention will now be described in detail. First, the block classification part 120 divides an input image into blocks, classifies the divided blocks into character blocks and background blocks, and converts the classified character blocks into pixels having a first brightness value and the classified background blocks into pixels having a second brightness value. The reason that the block classification part 120 classifies the blocks into character blocks and background blocks and then fills the classified character blocks and background blocks with pixels having different brightness values is to display character regions of the image. As mentioned above, it is assumed that each of the blocks has a size of 8x8 pixels. Then the median filter 130 performs median filtering on the image output from the block classification part 120 thus to remove erroneously classified character blocks of the image. Here, the median filter 130 performs a function of removing isolated character blocks erroneously classified as character blocks by noises in the block classification process.

The position search part 140 searches for a position of a character region by horizontally and vertically scanning the median-filtered image. The position search part 140 searches for a point x1 at the leftmost character block and a point x2 at the rightmost character block by horizontally scanning the median-filtered image, and stores the result values. Further, the position search part 140 searches for a point y1 at the topmost character block and a point y2 at the bottommost character block by vertically scanning the median-filtered image, and stores the result values. Thereafter, the position search part 140 determines left top and right bottom points (x1, y1) and (x2, y2) of the character region according to the search results. The left top and right bottom points (x1, y1) and (x2, y2) of the character region are determined based on an aspect ratio of the input image, such that distortion of the image can be prevented when the ROC extension part 160 extends the image. In the embodiment of the present invention, since a ratio of width to length associated with the input image is 4:3 (i.e., 640:480 pixels), the left top and right bottom points (x1, y1) and (x2, y2) of the character region are determined so that a ratio of width to length associated with the character region searched by the position search part 140 is 4:3.

The ROC extraction part 150 extracts the image of the character region searched by the position search part 140. In other words, the ROC extraction part 150 receives information associated with the left top and right bottom points (x1, y1) and (x2, y2) of the character region searched by the position search part 140, and extracts an image located between the left top and right bottom points (x1, y1) and (x2, y2) of the character region from the input image output from the input part 110. On the basis of the left top and right bottom points (x1, y1) and (x2, y2) of the character region, the ROC extraction part 150 extracts, as character region pixels, pixels between the point x1 and the point x2 in the horizontal direction and pixels between the point y1 and the point y2 in the vertical direction from the input image. An output image from the ROC extraction part 150 becomes an image of the character region in which a background region is removed from the input image.

The ROC extension part 160 extends the image of the extracted character region to a size of the input image. The image extension can be implemented by interpolation. It is assumed herein that the image extension is implemented by bilinear interpolation. Here, the image extension is achieved by the interpolation operation so that a size of the image of the extracted character region becomes equal to that of the input image.

The recognition part 170 receives the extended image output from the ROC extension part 160 and recognizes characters from the received image. Although the present invention has been described with reference to an embodiment in which the proposed character region extension device serves as a preprocessor of a recognizer, the proposed character region extension device can be used as a device for editing an image and storing the edited image in an image processing device.

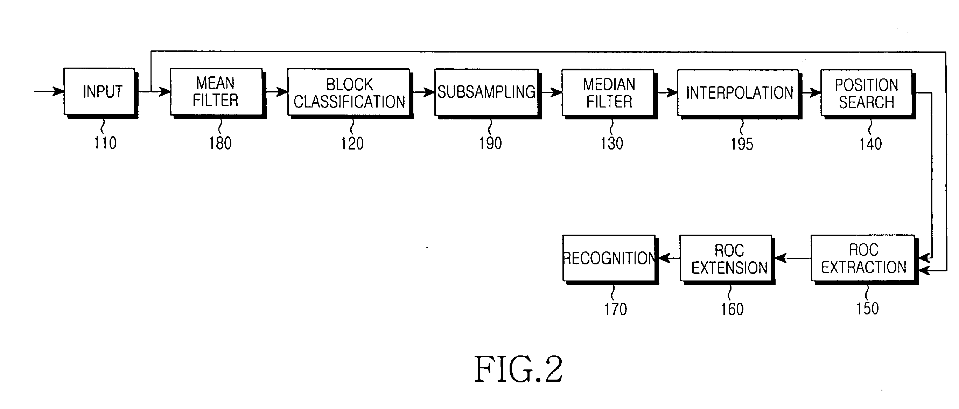

FIG. 2 is a block diagram illustrating a structure of a device for extending a character region in an image according to a second embodiment of the present invention. Referring to FIG. 2, an input part 110 has a function of receiving an input image. Here, a camera, a scanner, a communication interface including a modem and a network, and a computer can serve as the input part 110. It is assumed herein the input image is comprised of 640 (column) x 480 (row) pixels.

A mean filter 180 performs mean filtering on the input image and makes a blurred image. The mean filtering is performed to reduce the influence of a background region outside a character region in the following block classification process by blurring the input image.

A block classification part 120 divides an output image from the mean filter 180 into blocks, analyzes pixels included in the divided blocks, classifies the blocks into character blocks and background blocks, and converts pixels in the character blocks into pixels having a specified value. The block classification part 120 classifies the blocks into the character blocks and background blocks in order to extract a character region by converting the pixels in the character blocks into the pixels having a specified value. Here, it is assumed that each of the blocks consists of 8 x 8 pixels.

A subsampling part 190 subsamples an output image from the block classification part 120 to reduce the number of image pixels. The subsampling part 190 reduces the number of image pixels in order to increase a filtering rate by decreasing a filter window in the following median filtering process. In the embodiment of the present invention, it is assumed that a pixel reduction ratio is $(2 :1)^2$. In this case, the subsampling part 190 performs 2:1 subsampling on horizontal pixels and performs 2:1 subsampling on vertical pixels, such that the number of image pixels in the mage is reduced to 1/4.

A median filter 130 performs median filtering on an output image from the subsampling part 190, and removes erroneously classified character blocks from the input image. The median filter 130 performs a function of removing the isolated character blocks erroneously classified as character blocks due to noises in the block classification process.

An interpolation part 195 performs interpolation on pixels in an output image from the median filter 130 to extend the image. In the embodiment of the present invention, it is assumed that an interpolation ratio is $(2:1)^2$. In this case, the interpolation part 195 performs 2:1 interpolation on horizontal and vertical pixels of the output image from the median filter 130 to extend the image four times. The interpolation operation is performed in order to search for a correct position of the character region and to extend a size of the image reduced by the subsampling process to that of an original image.

A position search part 140 horizontally and vertically scans the median-filtered image and searches for a position of the character region. The position search part 140 horizontally scans the median-filtered image and searches for a point x1 at the leftmost character block and a point x2 at the rightmost character block. Furthermore, the position search part 140 vertically scans the median-filtered image, and searches for a pointy1 at the topmost character block and a point y2 at the bottommost character block. A position of the character region in the image is determined according to a result of the search. At this time, left top and right bottom points of the character region are (x1, y1) and (x2, y2). The left top and right bottom points (x1, y1) and (x2, y2) of the character region are determined based on an aspect ratio of the input image, such that the distortion of the image can be prevented when the following ROC extension part 160 extends the image.

An ROC extraction part 150 extracts the image of the character region searched by the position search part 140. In other words, the ROC extraction part 150 receives information associated with the left top and right bottom points (x1, y1) and (x2, y2) of the character region searched by the position search part 140, and extracts an image located between the left top and right bottom points (x1, y1) and (x2, y2) of the character region from the input image output from the input part 110. Accordingly, an output image from the ROC extraction part 150 becomes an image of the character region in which a background region is removed from the input image.

The ROC extension part 160 extends the image of the extracted character region to a size of the input image. The image extension can be implemented by interpolation. It is assumed herein that the image extension is implemented by bilinear interpolation. Here, the image extension is achieved by the interpolation operation so that a size of the image of the extracted character region can be equal to that of the input image.

A recognition part 170 accesses the extended image and recognizes characters from the accessed image.

Operation of the character region extension device will now be described in detail. First, the input part 110 receives an image having a size of N x M pixels. As mentioned above, it is assumed herein that the image has a size of 640 (N) x 480 (M) pixels. The input image can be a color image or grayscale image not having color information. In the embodiment of the present invention, it is assumed that the image is a grayscale image. The input part 110 for receiving the image can be a camera, a scanner, a communication interface including a modem and a network, or a computer. The mean filter 180 receiving the input image performs mean filtering on the input image, and makes a blurred image so that the background region outside the character region of the image does not affect a character region classification process by the following block classification part 120. Such a mean filter is disclosed in a reference entitled "Digital Image Processing," by R. C. Gonzalez, R. Woods, et al., 2nd ed., Prentice Hall, pp. 119-123, 2002, which is incorporated herein by reference.

The mean-filtered image is applied to the block classification part 120. The block classification part 120 divides an output image from the mean filter 180 into blocks, analyzes pixels contained in the blocks, classifies the blocks into character blocks and background blocks, and converts pixels of the classified character blocks into pixels having a specified value.

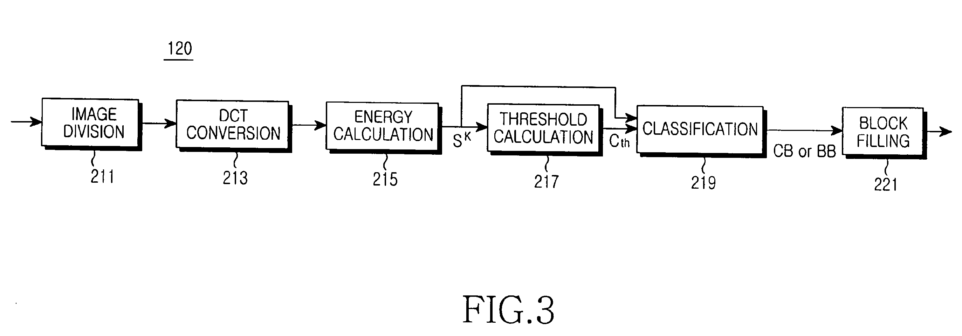

FIG. 3 is a block diagram illustrating a detailed structure of the block classification part 120 in accordance with an embodiment of the present invention. Referring to FIG. 3, an image division part 211 divides the image into blocks having a predetermined size. Here, the image consists of 640 x 480 pixels, and each of the blocks consists of 8 x 8 pixels. In this case, the image division part 211 divides the image into 4800 blocks.

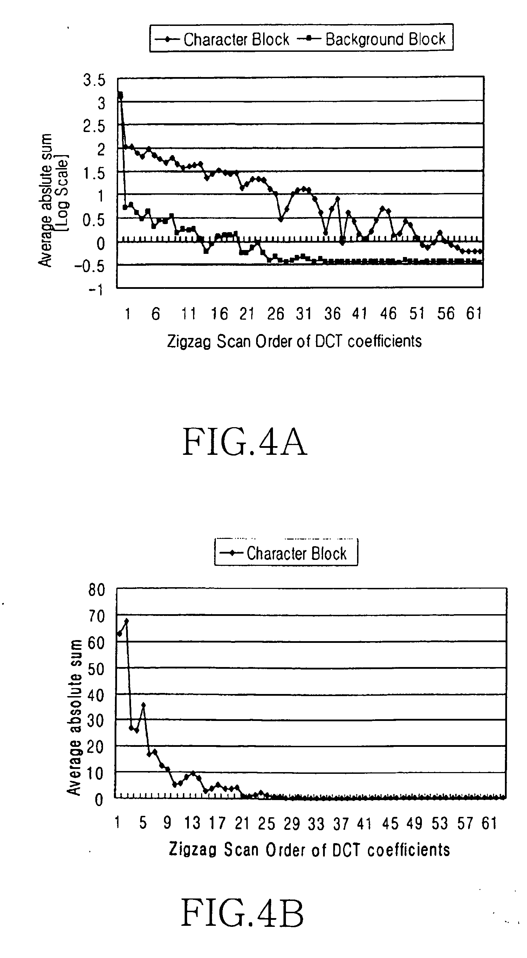

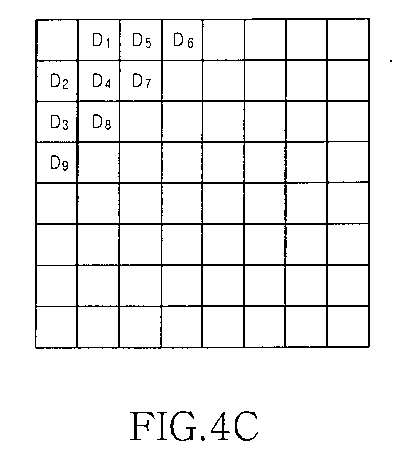

The blocks output from the image division part 211 are applied to a DCT (Discrete Cosine Transform) conversion part 213, and the DCT conversion part 213 performs DCT conversion on the blocks. An energy calculation part 215 calculates a sum of absolute values of dominant DCT coefficients within the DCT-converted blocks. In this case, an energy distribution value of the DCT coefficients within the character blocks is larger than that of DCT coefficients within the background blocks. FIG. 4A is a diagram illustrating a comparison of energy distributions of DCT coefficients for the character blocks and the background blocks. In FIG. 4A, a Y axis represents an average of the absolute sums in a log scale, and an X axis represents a zigzag scan order of the DCT coefficients. As illustrated in FIG. 4A, it can be noted that DCT coefficients of the character blocks are larger in their average values than the DCT coefficients of the background blocks. FIG. 4B is a diagram illustrating an energy distribution characteristic of DCT coefficients for the character blocks. In FIG. 4B, a Y axis represents an average of the absolute sums in a normal scale, and an X axis represents a zigzag scan order of the DCT coefficients. As illustrated in FIG. 4B, it can be noted that an average of absolute sums of some DCT coefficients for the character blocks is relatively larger. Thus, in the embodiment of the present invention, it is assumed that the dominant DCT coefficients used in a block classification process are $D_1 \sim D_9$ shown in FIG. 4C. Accordingly, a sum of the absolute values of the dominant DCT coefficients in a $k^{th}$ block can be calculated by

$$S^k = \sum_{i=1}^{9} \left| D_i^k \right| \quad \ldots \ldots \ldots (1)$$

In Equation (1), $|D_j^k|$ denotes an $i^{th}$ dominant DCT coefficient of the $k^{th}$ block, and $S^k$ denotes the sum of the absolute values of the dominant DCT coefficients in the $k^{th}$ block. Thus, in the embodiment of the present invention, a sum of the dominant DCT coefficients $D_1 \sim D_9$ is calculated.

The energy calculation part 215 performs a calculation of Equation (1) on all blocks (at k = 0, 1, 2, ... , 4799). Energy values $S^k$ (k = 0, 1, 2, ... , 4799) calculated block by block are applied to a block threshold calculation part 217.

The block threshold calculation part 217 sums up the energy values $S^k$ (k = 0, 1, 2, ... , 4799) calculated block by block, and produces an average $\langle S^k \rangle$ by dividing the summed energy value by the total number TBN of blocks. The average value $\langle S^k \rangle$ is produced in accordance with Equation (2) below. The average value $\langle S^k \rangle$ becomes a block threshold $Cth$ used for determining the blocks as character blocks or background blocks.

$$\langle S^k \rangle = \frac{1}{TBN} \sum_{k=1}^{TBN} S^k \quad \ldots \ldots \ldots (2)$$
$$= Cth$$

In Equation (2), TBN denotes the total number of blocks.

A classification part 219 sequentially receives energy values (corresponding to sums of the absolute values of dominant DCT coefficients for the blocks) output from the energy calculation part 215 on a block-by-block basis. The classification part 219 classifies a corresponding block as a character block or a background block by comparing the received block energy values with a block threshold $Cth.$ At this time, the classification part 219 classifies the $k^{th}$ block as a character block if $S^k \geq Cth$ and classifies the $k^{th}$ block as a background block if $S^k < Cth$ as shown in Equation (3).

$$IF \ S^k \geq Cth \quad then \ CB$$
$$else \ BB \quad \ldots \ldots \ldots (3)$$

Pixels in the character blocks classified by the classification part 219 can have gray levels between 0 and 255. A block filling part 221 then converts pixels of a character block classified by the classification part 219 into pixels having the first brightness value, and converts pixels of a background block into pixels having the second brightness value. In the embodiment of the present invention, it is assumed that the block filling part 221 converts the pixels in the character block into white pixels, and converts the pixels in the background block into black pixels. Thus, the block filling part 221 fills the character blocks of the image with the white pixels and fills the background blocks of the image with the black pixels. The character blocks and background blocks are filled with pixels of different brightness values after the block classification part 120 classifies the blocks into the character blocks and background blocks in order to appropriately display character regions.

Thereafter, the subsampling part 190 subsamples an output image from the block classification part 120 to reduce the number of horizontal and vertical pixels. The subsampling part 190 reduces the number of image pixels in order to increase a filtering rate by decreasing a filter window in the following median filtering process. In the embodiment of the present invention, it is assumed that the pixel reduction ratio is $(2:1)^2$. In this case, the number of pixels of the output image from the block classification part 120 is reduced to 1/4. That is, a size of the reduced image is 320 x 240 pixels.

Then the median filter 130 performs median filtering on an output image from the subsampling part 190, and removes background blocks and erroneously classified character blocks from the input image. The median filter 130 performs a function of removing the isolated blocks erroneously classified as character blocks due to the noise in the block classification process. Such a median filter is disclosed in a reference entitled "Fundamental of Digital Image Processing," by A. K. Jain, Prentice Hall, pp. 246-249 which is incorporated herein by reference.

After the median filtering on the image, the interpolation part 195 performs interpolation on horizontal and vertical pixels of an output image from the median filter 130 to extend the image to a size of the input image. In the embodiment of the present invention, it is assumed that an interpolation ratio $(2:1)^2$. The interpolation operation is performed in order to search for a correct position of the character region and to extend a size of the image reduced by the subsampling process to that of an original image.

The position search part 140 horizontally and vertically scans the median-filtered image and searches for a position of the character region. The position search part 140 horizontally scans the median-filtered image, searches for a point x1 at the leftmost character block and a point x2 at the rightmost character block, and saves a result of the search. Furthermore, the position search part 140 vertically scans the median-filtered image, searches for a point y1 at the topmost character block and a point y2 at the bottommost character block, and stores a result of the search. The left top and right bottom points (x1, y1) and (x2, y2) of the character region depend upon the results of the searches. The left top and right bottom points (x1, y1) and (x2, y2) of the character region are determined based on an aspect ratio of the input image, such that the distortion of the image can be prevented when the following ROC extension part 160 extends the image. In the embodiment of the present invention, since a ratio of width to length associated with the input image is 4:3 (i.e., 640:480 pixels), the left top and right bottom points (x1, y1) and (x2, y2) of the character region are determined so that a ratio of width to length associated with the character region searched by the position search part 140 becomes 4:3.

The ROC extraction part 150 extracts the image of the character region searched by the position search part 140. In other words, the ROC extraction part 150 receives information associated with the left top and right bottom points (x1, y1) and (x2, y2) of the character region searched by the position search part 140, and extracts an image located between the left top and right bottom points (x1, y1) and (x2, y2) of the character region from the input image output from the input part 110. On the basis of the left top and right bottom points (x1, y1) and (x2, y2) of the character region, the ROC extraction part 150 extracts, as character region pixels, pixels between the point x1 and the point x2 in the horizontal direction and pixels between the point y1 and the point y2 in the vertical direction. An output image from the ROC extraction part 150 becomes an image of the character region in which a background region is removed from the input image.

The ROC extension part 160 extends the image of the extracted character region to a size of the input image. The image extension can be implemented by interpolation. In the embodiment of the present invention, it is assumed that the image extension is implemented by bilinear interpolation defined as

$$v(x, y) = (1 - \Delta x)(1 - \Delta y)u(m,n) + (1 - \Delta x)\,\Delta y\, u(m,n + 1)$$

$$+ \Delta x(1 - \Delta y)\,u(m + 1, n) + \Delta x \Delta y\, u(m + 1, n + 1) \tag{4}$$

*where*

$\Delta x = x - m$
$\Delta y = y - n$

Here, the image extension is achieved by the interpolation operation so that a size of the image of the extracted character region can be equal to that of the input image. Such bilinear interpolation is disclosed in a reference entitled "Numerical Recipies in C," by W. H. Press, S. A. Teukolsky, et al., 2nd ed., Cambridge, pp. 123-125, 1988 which is incorporated herein by reference.

The recognition part 170 receives the extended image output from the ROC extension part 160 and recognizes characters from the received image. Although the present invention has been described with reference to an embodiment in which the proposed character region extension device serves as a preprocessor of a recognizer, the proposed character region extension device can be used as a device for editing an image and storing the edited image in an image processing device.

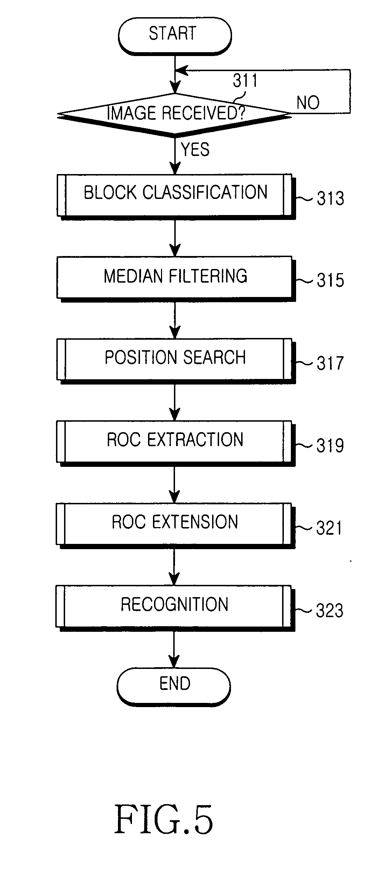

FIG. 5 is a flowchart illustrating a procedure for extending a character region in an image according to a first embodiment of the present invention. Referring to FIG. 5, it is determined in step 311 whether an input image is received. If so, in step 313, the input image is divided into blocks having a predetermined size, the divided blocks are classified into character blocks and background blocks, pixels in the classified character blocks are converted into pixels having a first brightness value, and pixels in the classified background blocks are converted into pixels having a second brightness value. In step 315, the block-classified image is subject to median filtering to remove an erroneously classified character region from the mage. The median filtering process is performed to remove isolated character blocks left in the image as they are erroneously classified as character blocks due to noises in the block classification process.

In step 317, the median-filtered image is horizontally and vertically scanned to search for a position of the character region. The position search part 140 horizontally scans the median-filtered image, searches for a point x1 at the leftmost character block and a point x2 at the rightmost character block, and saves the result values. Furthermore, the position search part 140 vertically scans the median-filtered image, searches for a pointy1 at the topmost character block and a point y2 at the bottommost character block, and saves the result values. Thereafter, left top and right bottom points (x1, y1) and (x2, y2) of the character region in the image are determined according to the search results. In this case, the left top and right bottom points (x1, y1) and (x2, y2) of the character region are determined based on an aspect ratio of the input image, such that distortion of the image can be prevented when the following ROC extension part 160 extends the image.

In step 319, an image of the searched character region is extracted from the input image. That is, the ROC extraction part 150 receives information associated with the left top and right bottom points (x1, y1) and (x2, y2) of the character region searched by the position search part 140, and extracts an image located between the left top and right bottom points (x1, y1) and (x2, y2) of the character region from the input image output from the input part 110. On the basis of the left top and right bottom points (x1, y1) and (x2, y2) of the character region, the ROC extraction part 150 extracts, as an image of the character region, an image located between the point x1 and the point x2 in the horizontal direction and an image located between the point y1 and the point y2 in the vertical direction from the input image. An output image from the ROC extraction part 150 becomes an image of the character region in which a background region is removed from the input image. Accordingly, an output image from the ROC extraction part 150 becomes an image of the character region in which an unwanted outside region is removed from the input image.

Thereafter, in step 321, the image of the extracted character region is extended to a size of the input image. The image extension can be implemented by interpolation. It is assumed herein that the image extension is implemented by bilinear interpolation defined in Equation (4). Here, the image extension is achieved by the interpolation operation so that a size of the image of the extracted character region can be equal to that of the input image.

In step 323, the extended image is output to the character recognition part 170, and the character recognition part 170 recognizes characters from the extended image. When occasion demands, the extended image can be used in an image processing device that edits an image and saves the edited image.

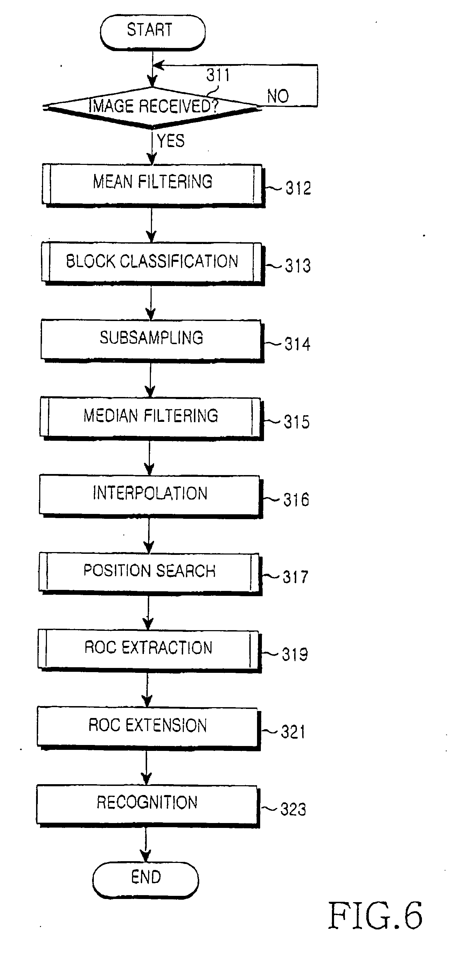

FIG. 6 is a flowchart illustrating a procedure for extending a character region in an image according to a second embodiment of the present invention. Comparing FIG. 2 with FIG. 1, the character region extension method show in FIG. 2 further includes a process of mean-filtering an image before block classification, and subsampling and interpolation processes before and after median filtering in addition to the character region extension method shown in FIG. 1. Processes other than these processes are identical in operation to their corresponding processes show in FIG. 1.

Referring to FIG. 6, in step 311, the input part 110 receives an image having a size of N x M pixels. As mentioned above, it is assumed herein that the image has a size of 640 (N) × 480 (M) pixels. The input image can be a color image or grayscale image not having color information. In the embodiment of the present invention, it is assumed that the image is a grayscale image. Thereafter, in step 312, the image is subject to mean filtering to make a blurred image so that the background region outside the character region of the image does not affect a character region classification process.

Thereafter, in step 313, the mean-filtered image is divided into blocks having a preset size, pixels contained in the blocks are analyzed, the blocks are classified into character blocks and background blocks, and pixels of the classified character blocks are converted into pixels having a specified value.

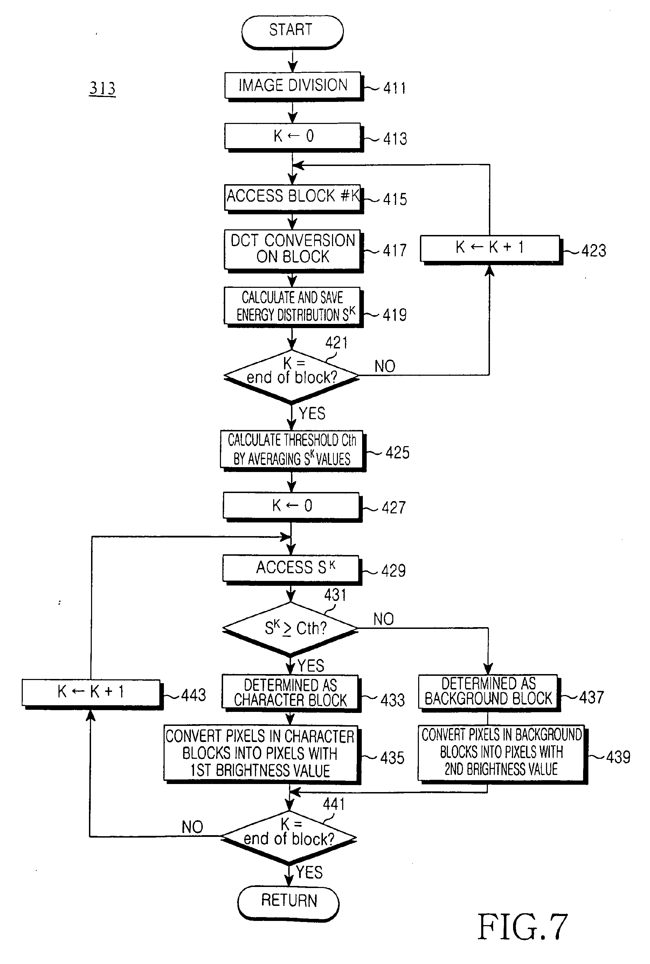

FIG. 7 is a flowchart illustrating a detailed procedure of the block classification process of step 313. Referring to FIG. 7, in step 411, an input image is divided into blocks having a predetermined size. Here, the image consists of 640 x 480 pixels, and each of the blocks consists of 8 x 8 pixels. In this case, the image is divided into 4800 blocks.

Thereafter, a block number BN is set to 0 in step 413, and a block with the block number BN is accessed in step 415. In step 417, the accessed block is subject to DCT conversion. In step 419, the sum $S^k$ of absolute values of dominant DCT coefficients within the DCT-converted block #BN is calculated using Equation (1), and then saved. In this case, an energy distribution value of the DCT coefficients within the character blocks is larger than that of DCT coefficients within the background blocks. Energy distributions of the DCT coefficients for the character blocks and the background blocks show a characteristic illustrated in FIG. 4A. Further, an energy distribution characteristic of DCT coefficients for the character blocks shows a characteristic illustrated in FIG. 4B. Therefore, the sum $S^k$ of absolute values of the DCT coefficients in the $k^{th}$ block can be calculated in accordance with Equation (1). Here, 'k' is the same parameter as BN, and denotes a block number. After the $S^k$ is saved in step 419, it is determined in step 421 whether $S^k$ of the last block is calculated. If $S^k$ of the last block is not calculated yet, the procedure increases the block number by one in step 423, and then returns to step 415 to repeat the above operation.

Through repetition of the steps 415 to 423, the respective blocks are subject to DCT conversion and the calculation of Equation (1) is performed all blocks (at k = 0, 1, 2, ... , 4799). In step 425, a threshold Cth is calculated using energy values $S^k$ (k = 0, 1, 2, ... , 4799) calculated block by block. That is, the energy values $S^k$ (k = 0, 1, 2, ... , 4799) calculated block by block are sums up, and an average $\langle S^k \rangle$ is produced by dividing the summed energy value by the total number TBN of blocks. The average value $\langle S^k \rangle$ is produced in accordance with Equation (2). The average value $\langle S^k \rangle$ becomes a block threshold *Cth* used for determining the blocks as character blocks or background blocks.

After the threshold Cth is calculated, an operation of classifying the blocks into character blocks and background blocks is performed. For that purpose, a block number BN is initialized to '0' in step 417, and $S^k$ of a block with the block number BN is accessed in step 429. Thereafter, in step 431, the classification part 219 classifies a corresponding block as a character block or a background block by comparing $S^k$ of the block with the block threshold *Cth* At this time, the classification part 219 classifies the $k^{th}$ block as a character block if $S^k \geq Cth$ and classifies the $k^{th}$ block as a background block if $S^k < Cth$ as shown in Equation (3).

Pixels in the classified character blocks can have gray levels between 0 and 255. In the embodiment of the present invention, since only the character region is extracted from the image, it is necessary to definitely distinguish the character region from the background region in the block classification process. Therefore, if a corresponding block is classified as a character block in step 433, pixels in the classified character block are converted into pixels having a first brightness value in step 435. Otherwise, if a corresponding block is classified as a background block in step 437, pixels in the classified background block are converted into pixels having a second brightness value in step 439. In the embodiment of the present invention, it is assumed that the pixels in the character block are converted into white pixels, while the pixels in the background block are converted into black pixels. Thus, by filling the character blocks with the white pixels and filling the background blocks with the black pixels in the block classification process, the image is definitely distinguished into character blocks and background blocks.

After whether a block #BN is a character block or a background block is determined and pixels therein are converted into pixels with a corresponding brightness value through the steps 429 to 439, it is determined in step 441 whether the classified block is the last block. If the block #BN is not the last block, the procedure increases the block number by one in step 443, and then returns to step 429 to repeat the above operation. When the above operation is completely performed, the block classification results are output. After the image is divided into the blocks, an operation of classifying the blocks into character blocks and background blocks and correcting brightness values of pixels in the classified blocks is performed.

When the block classification operation of FIG. 7 is performed in step 313 of FIG. 6, the image is classified into character blocks and background blocks. Further, pixels in the classified character blocks are converted into white pixels, while pixels in the background character blocks are converted into black pixels. In this manner, pixels in the classified blocks of the image are corrected into white pixels or black pixels.

Thereafter, in step 314, the image is subject to subsampling to reduce the number of horizontal and vertical pixels. The subsampling is performed to increase a filtering rate by decreasing a filter window in the following median filtering process. Assuming that the subsampling ratio is $(2:1)^2$, the horizontal and vertical pixels of the image are subject to 2:1 subsampling, so that the number of pixels is reduced to 1/4. In this case, a size of the reduced image is 320 x 240 pixels. After the subsampling is performed, the reduced image is subject to median filtering in step 315. The median filtering is performed to remove the isolated blocks left in the image as they are erroneously classified due to the edges or noises of the image. After the erroneously classified character blocks are removed by performing the median filtering, the horizontal and vertical pixels of the median-filtered image are subject to interpolation to extend the image to a size of the input image in step 316.

Thereafter, in step 317, the interpolated image whose size is extended to its original size is horizontally and vertically scanned to search for a position of a character region. The position search part 140 horizontally scans the median-filtered image, searches for a point x1 at the leftmost character block and a point x2 at the rightmost character block, and saves a result of the search. Furthermore, the position search part 140 vertically scans the median-filtered image, searches for a point y1 at the topmost character block and a point y2 at the bottommost character block, and stores a result of the search. The left top and right bottom points (x1, y1) and (x2, y2) of the character region depend upon the results of the searches. The left top and right bottom points (x1, y1) and (x2, y2) of the character region are determined based on an aspect ratio of the input image, such that the distortion of the image can be prevented when the following ROC extension part 160 extends the image. In the embodiment of the present invention, since a ratio of width to length associated with the input image is 4:3 (i.e., 640:480 pixels), the left top and right bottom points (x1, y1) and (x2, y2) of the character region are determined so that a ratio of width to length associated with the character region searched by the position search part 140 also becomes 4:3.

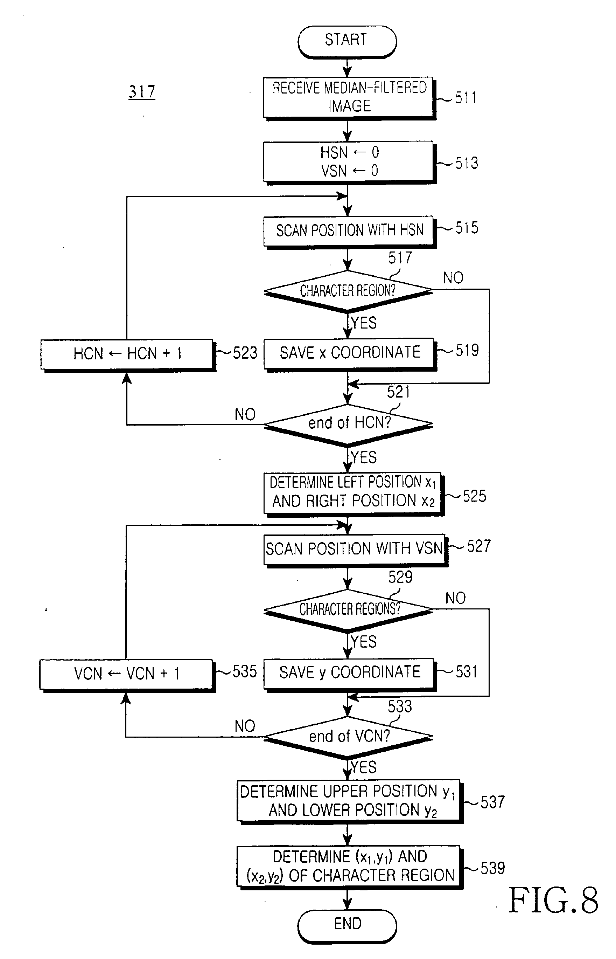

FIG. 8 is a flowchart illustrating a detailed procedure of the position search process of step 317. Referring to FIG. 8, the median-filtered image is received in step 511, and a horizontal scan parameter HSN and a vertical scan parameter VSN are both initialized to '0' in step 513. Thereafter, a position with the HSV is canned in step 515, and it is determined in step 517 whether the scanned position with the HSN is in a character region. If the scanned position with the HSN is in a character region, an x coordinate value of the HSN is saved in step 519. Thereafter, it is determined in step 521 whether the HSN is a value of the last horizontal (or rightmost) scan position. If the HSN is not a value of the last horizontal scan position, the procedure determines the next horizontal scan position in step 523, and then returns to step 515 to repeat the above operation. If horizontal scanning is completely performed on up to the last HSN horizontal scan position through repetition of the above operation, the completed horizontal scanning is detected in step 521. Thereafter, in step 525, a coordinate value x1 of a left position and a coordinate value x2 of a right position, scanned as a character region, are determined and saved.

A position with the VSN is scanned in step 527, and it is determined in step 529 whether the scanned position with the VSN is in a character region. If the scanned position with the VSN is in a character region, a y coordinate value of the VSN is saved in step 531. Thereafter, it is determined in step 533 whether the VSN is a value of the last vertical (or bottommost) scan position. If the VSN is not a value of the last vertical scan position, the procedure determines the next vertical scan position in step 535, and then returns to step 527 to repeat the above operation. If vertical scanning is completely performed on up to the last VSN vertical position through repetition of the above operation, the completed vertical scanning is detected in step 533. Thereafter, in step 537, a coordinate value y1 of an upper position and a coordinate value y2 of a lower position, scanned as a character region, are determined and saved.

Thereafter, in step 539, left top and right bottom points (x1, y1) and (x2, y2) of the character region in the image are determined according to the search results. The left top and right bottom points (x1, y1) and (x2, y2) of the character region are determined based on an aspect ratio of the input image, such that distortion of the image can be prevented when the ROC extension part 160 extends the image. In the embodiment of the present invention, since a ratio of width to length associated with the input image is 4:3 (i.e., 640:480 pixels), the left top and right bottom points (x1, y1) and (x2, y2) of the character region are determined so that a ratio of width to length associated with the character region searched by the position search part 140 is 4:3. Therefore, if the determined positions of the character region are inconsistent with an aspect ratio of the input image, the positions of the character region are changed so that they are coincident with an aspect ratio of the input image.

In the above position search method, an initial character region is searched through horizontal scanning from the left to the right, and its position is saved as a value x1. Thereafter, the last character region is searched through horizontal scanning from the right to the left, and its position is saved as a value x2. In the same method, the initial character region is searched through vertical scanning from the top to the bottom, and its position is saved as a value y1. Thereafter, the last character region is searched through vertical scanning from the bottom to the top, and its position is saved as a value y2. In this manner, a position of the character region can be searched.

After a position of a character region is searched in step 317 of FIG. 6 through the procedure of FIG. 8, an image corresponding to the position of the searched character region is extracted in step 319. That is, an image located between the left top and right bottom points (x1, y1) and (x2, y2) of the character region is extracted from the input image as a character region. Pixels in the extracted character region constitute an image existing between the point x1 and the point x2 in the horizontal direction and between the point y1 and the point y2 in the vertical direction in the input image. The pixels of the character region constitute an image of the character region in which a background region is removed from the input image.

After step 319, the image of the extracted character region is extended to a size of the input image in step 321. The image extension can be implemented by interpolation. In the embodiment of the present invention, it is assumed that the image extension is implemented by bilinear interpolation defined as Equation (4). In step 323, the image of the extended character region can be output to the recognition part 170 or saved for other uses.

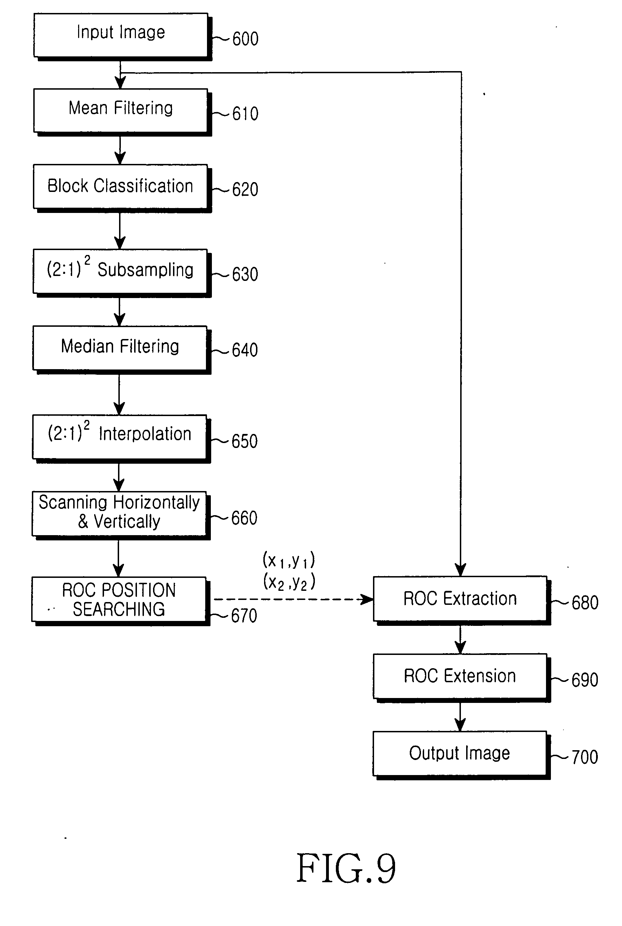

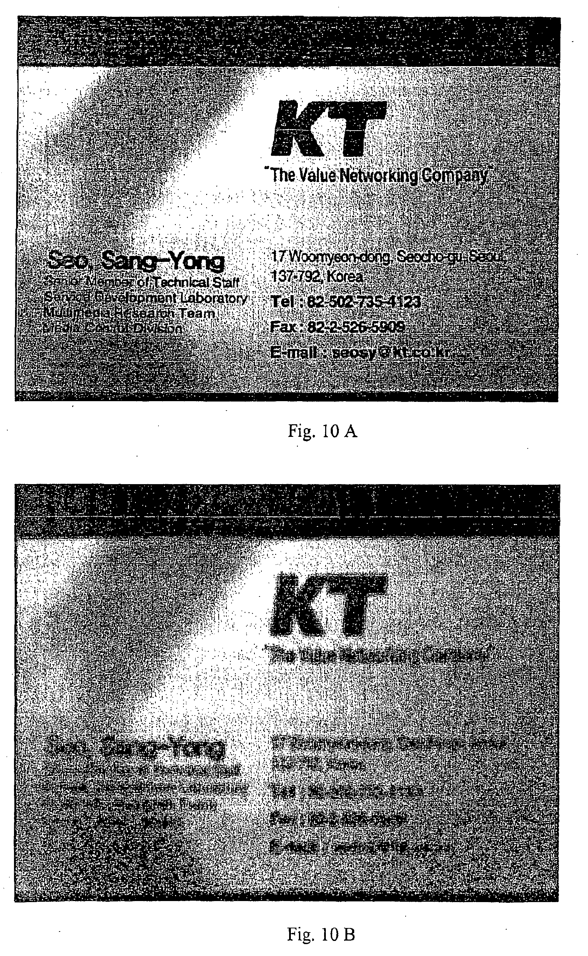

FIG. 9 is a flowchart illustrating a procedure for extending a character region in an image according to an embodiment of the present invention. FIGs. 10A to 10H are diagrams illustrating images generated in the procedure of FIG. 9.

A device for extending a character region in an image according to an embodiment of the present invention will now be description with reference to FIGs. 9 and 10A to 10H. In step 600, the input part 110 receives an input image shown in FIG. 10A. It is assumed herein the input image is comprised of 640 (column) $\times$ 480 (row) pixels and can be a grayscale image not having color information. In the embodiment of the present invention, it is assumed that the image is a grayscale image. Thereafter, in step 610, the mean filter 180 performs mean filtering on the input image of FIG. 10A, and generates a blurred image shown in FIG. 10B, so that the background region outside the character region of the image does not affect a character region classification process.

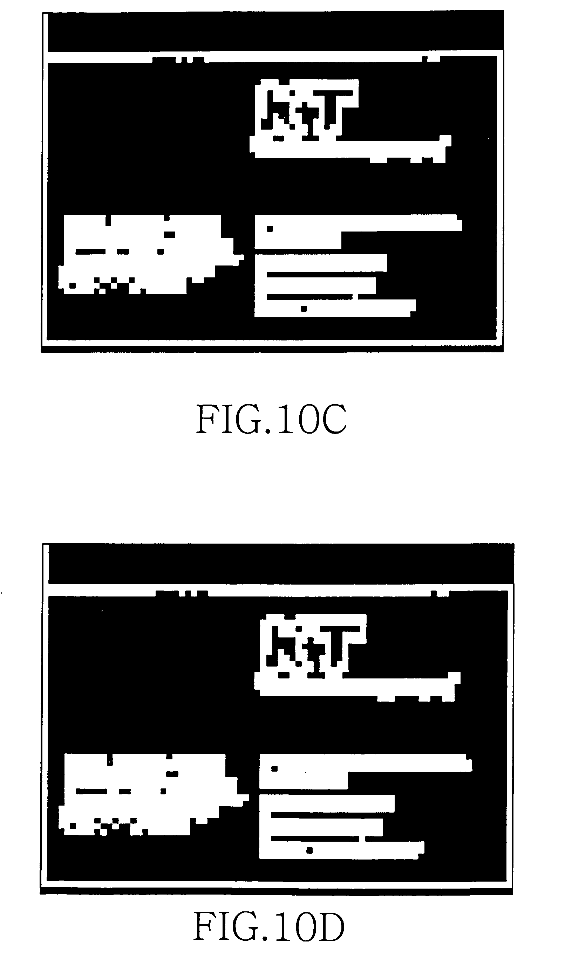

Thereafter, in step 620, the block classification part 120 divides the mean-filtered image into blocks having a predetermine size, analyzes pixels included in the divided blocks, classifies the blocks into character blocks and background blocks, and converts pixels in the character blocks into pixels having a specified value. Through the block classification, the image is classified into character blocks and background blocks, pixels in the character blocks are converted to white pixels, and pixels in the background blocks are converted into black pixels. Thus, the image is filled with white or black pixels according to classified blocks. The image generated by the block classification part 120 is shown in FIG. 10C.

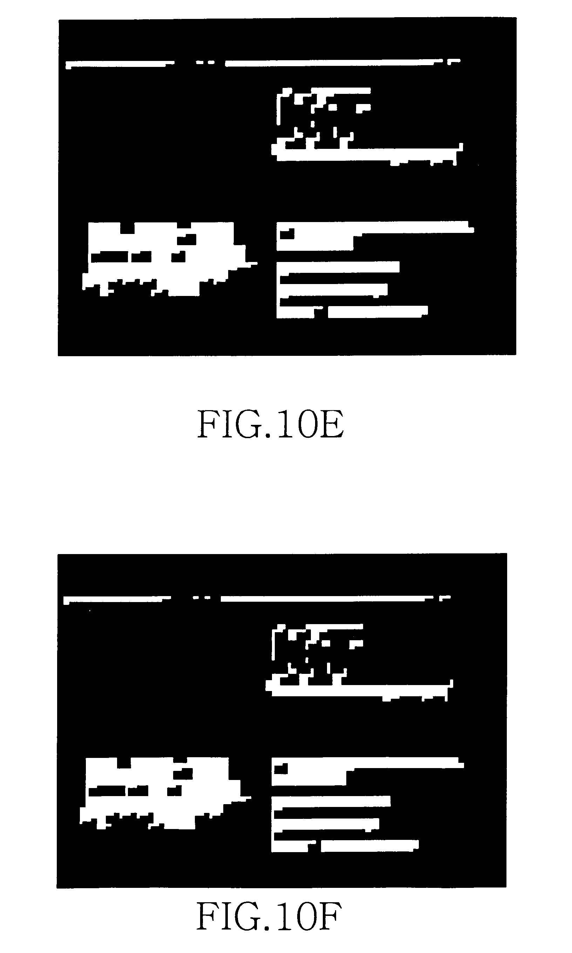

If the block-classified image of FIG. 10C is generated in step 620, the subsampling part 190 subsamples in step 630 the block-classified image of FIG. 10C, and generates an image of FIG. 10D in which the number of vertical and horizontal pixels is reduced. The subsampling is performed to increase a filtering rate by decreasing a filter window in the following median filtering process. FIG. 10D shows an image subsampled at a subsampling ratio $(2:1)^2$. After the subsampling, the median filter 130 performs in step 640 median filtering on the subsampled image. The median filtering is performed to remove isolated character blocks erroneously classified as character blocks due to the edges or noises of the input image. The median-filtered image is shown in FIG. 10E.

After the erroneously classified character blocks are removed through he median filtering, the interpolation part 195 performs interpolation in step 650 on horizontal and vertical pixels in the median-filtered image of FIG. 10E, thus to extend a size of the image to that of the input image as shown in FIG. 10F.

In step 660, a position search part 140 horizontally and vertically scans the interpolated image of FIG. 10F, and searches for a position of a character region. The position search part 140 horizontally scans the median-filtered image and searches for a point x1 at the leftmost character block and a point x2 at the rightmost character block. Furthermore, the position search part 140 vertically scans the median-filtered image, and searches for a point y1 at the topmost character block and a point y2 at the bottommost character block. Thereafter, in step 670, the position search part 140 determines left top and right bottom points (x1, y1) and (x2, y2) of the character region in the image according to a result of the search. At this time, the left top and right bottom points (x1, y1) and (x2, y2) of the character region are determined based on an aspect ratio of the input image, such that the distortion of the image can be prevented when the following ROC extension part 160 extends the image.

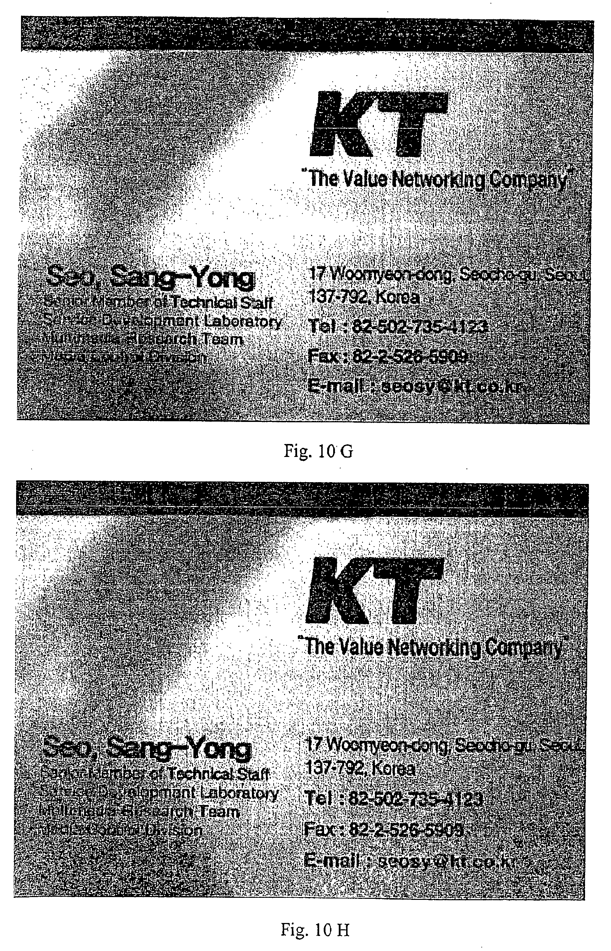

After the position of the character region is searched, the ROC extraction part 150 extracts in step 680 an image existing in the searched position of the character region from the input image of FIG. 10A. That is, the character region is extracted by extracting an image existing between left top and right bottom points (x1, y1) and (x2, y2) of the character region from the image of FIG. 10A, and the extracted image is shown in FIG. 10G. The extracted image of the character region, shown in FIG. 10G, is located between the point x1 and the point x2 in the horizontal direction and between the point y1 and the point y2 in the vertical direction in the input image. The image of the character region becomes an image of the character region in which a background region is removed from the input image.

After the image of the character region is extracted, the ROC extension part 160 extends in step 690 the image of the character region, shown in FIG. 10G, to a size of the input image as shown in FIG. 10H. The image extension can be implemented by interpolation. In the embodiment of the present invention, the image extension can be implemented by bilinear interpolation. In step 700, the extended image of FIG. 10H is output to the recognition part 170 or can be used for other purposes.

As descried above, in the new image signal preprocessing operation, a position of a character region in an input image is searched, an image of the searched character region is extracted, and the extracted image of the character region is extended to a size of the input image, so that only the character region is subject to character recognition, contributing to an improvement in recognition performance. In addition, the image is classified into character regions and background regions, and the blocks erroneously classified as character regions are removed to thereby improve search performance of a character region.

While the invention has been shown and described with reference to a certain preferred embodiment thereof, it will be understood by those skilled in the art that various changes in form and details may be made therein without departing from the spirit and scope of the invention as defined by the appended claims.

**EP 1 469 418 A2**

**Claims**

1. A device for extending a character region in an image, comprising:

   an input part for receiving an input image;
   a block classification part for classifying the input image into character blocks and background blocks, and converting pixels in the character blocks into pixels having a first brightness value and pixels in the background blocks into pixels having a second brightness value;
   a position search part for searching for left, right, top and bottom positions of a character region by horizontally and vertically scanning the block-classified image, and determining a position of the character region;
   an ROC (Region Of Contents) extraction part for extracting an image in the determined position of the character region from the input image; and
   an ROC extension part for extending the extracted image of the character region to a size of the input image.

2. The device of claim 1, wherein the block classification part comprises:

   an image division part for dividing the input image into blocks having a predetermined size;
   a DCT (Discrete Cosine Transform) conversion part for DCT-converting the divided blocks output from the image division part;
   an energy calculation part for calculating a sum of absolute values of dominant DCT coefficients in each of the DCT-converted blocks, and outputting the calculated sum as an energy value of a corresponding block;
   a threshold calculation part for summing up the energy values calculated for the respective blocks, output from the energy calculation part, and generating a threshold by dividing the summed energy value by the total number of the blocks;
   a classification part for sequentially receiving the block energy values output from the energy calculation part, and classifying the blocks into character blocks or background blocks by comparing the received block energy values with the threshold; and
   a block filling part for filling the character blocks with pixels having a first brightness value and filling the background blocks with pixels having a second brightness value.

3. The device of claim 2, wherein each of the blocks has a size of 8x8 pixels, and an energy value of each block is calculated by

$$S^k = \sum_{i=1}^{9} \left| D_i^k \right|$$

   where $|D_i^k|$ denotes an $i^{th}$ dominant DCT coefficient of a $k^{th}$ block, and $S^k$ denotes the sum of the absolute values of the dominant DCT coefficients in the $k^{th}$ block.

4. The device of claim 1, wherein the position search part searches a position of a character region by horizontally and vertically scanning the block-classified image, and determines a position of the character region according to the search result so that the character region has an aspect ratio of the input image.

5. The device of claim 1, wherein the ROC extension part performs bilinear interpolation on the extracted image of the character region in accordance with the following equation.

$$v(x, y) = (1 - \Delta x)(1 - \Delta y)u(m, n) + (1 - \Delta x) \Delta y\, u(m, n + 1)$$

$$+ \Delta x(1 - \Delta y)u(m + 1, n) + \Delta x \Delta y\, u(m + 1, n + 1)$$

   *where*

   $\Delta x = x - m$
   $\Delta y = y - n$

13

**6.** A device for extending a character region in an image, comprising:

an input part for receiving an input image;
a block classification part for classifying the input image into character blocks and background blocks, and converting pixels in the character blocks into pixels having a first brightness value and pixels in the background blocks into pixels having a second brightness value;
a median filter for performing median filtering on an image output from the block classification part to remove blocks erroneously classified as character blocks;
a position search part for searching for left, right, top and bottom positions of a character region by horizontally and vertically scanning the median-filtered image, and determining a position of the character region;
an ROC (Region Of Contents) extraction part for extracting an image in the determined position of the character region from the input image; and
an ROC extension part for extending the extracted image of the character region to a size of the input image.

**7.** The device of claim 6, wherein the median filter determines isolated character blocks as erroneously classified character blocks.

**8.** A device for extending a character region in an image, comprising:

an input part for receiving an input image;
a mean filter for performing mean filtering on the input image to blur the input image;
a clock classification part for classifying the mean-filtered image into character blocks and background blocks, and converting pixels in the background blocks into pixels having a first brightness value and pixels in the background blocks into pixels having a second brightness value;
a median filter for performing median filtering on an image output from the block classification part to remove blocks erroneously classified as character blocks;
a position search part for searching for left, right, top and bottom positions of a character region by horizontally and vertically scanning the median-filtered image, and determining a position of the character region;
an ROC (Region Of Contents) extraction part for extracting an image in the determined position of the character region from the input image; and
an ROC extension part for extending the extracted image of the character region to a size of the input image.

**9.** A device for extending a character region in an image, comprising:

an input part for receiving an input image;
a mean filter for performing mean filtering on the input image to blur the input image;
a block classification part for classifying the mean-filtered image into character blocks and background blocks, and converting pixels in the character blocks into pixels having a first brightness value and pixels in the background blocks into pixels having a second brightness value;
a subsampling part for subsampling pixels in the image output from the block classification part to reduce the number of the pixels;
a median filter for performing median filtering on the subsampled image to remove blocks erroneously classified as character blocks;
an interpolation part for performing interpolating on the median-filtered image to extend the median-filtered image to a size of the input image;
a position search part for searching for left, right, top and bottom positions of a character region by horizontally and vertically scanning the block-classified image, and determining a position of the character region;
an ROC (Region Of Contents) extraction part for extracting an image in the determined position of the character region from the input image; and
an ROC extension part for extending the extracted image of the character region to a size of the input image.

**10.** The device of claim 9, wherein the subsampling part subsamples the pixels at a subsampling ratio of $(2:1)^2$.

**11.** A method for extending a character region in an image, comprising the steps of:

receiving an input image;
classifying the input image into character blocks and background blocks, and converting pixels in the character blocks into pixels having a first brightness value and pixels in the background blocks into pixels having a second brightness value;
searching for left, right, top and bottom positions of a character region by horizontally and vertically scanning the block-classified image, and determining a position of the character region;
extracting an image in the determined position of the character region from the input image; and
extending the extracted image of the character region to a size of the input image.

**12.** The method of claim 11, wherein the block classification step comprises the steps of:

dividing the input image into blocks having a predetermined size;
DCT (Discrete Cosine Transform)-converting the divided blocks;
calculating a sum of absolute values of dominant DCT coefficients in each of the DCT-converted blocks, and outputting the calculated sum as an energy value of a corresponding block;
summing up the energy values calculated for the respective blocks, and generating a threshold by dividing the summed energy value by the total number of the blocks;
sequentially receiving the block energy values, and classifying the blocks into character blocks or background blocks by comparing the received block energy values with the threshold; and
filling the character blocks with pixels having a first brightness value and
filling the background blocks with pixels having a second brightness value.

**13.** The method of claim 12, wherein each of the blocks has a size of 8x8 pixels, and an energy value of each block is calculated by

$$S^k = \sum_{i=1}^{9} \left| D_i^k \right|$$

where $|D_i^k|$ denotes an $i^{th}$ dominant DCT coefficient of a $k^{th}$ block, and $S^k$ denotes the sum of the absolute values of the dominant DCT coefficients in the $k^{th}$ block.

**14.** The method of claim 11, wherein the position search step comprises the steps of:

searching for a position of a character region by horizontally and vertically scanning the block-classified image;
determining a position of the character region according to the search result; and
correcting the determined position of the character region so that the character region has an aspect ratio of the input image.

**15.** The method of claim 11, wherein the extracted image of the character region is subject to bilinear interpolation in accordance with the following equation.

$$v(x,y) = (1 - \Delta x)(1 - \Delta y)u(m,n) + (1 - \Delta x) \Delta y\, u(m, n + 1)$$

$$+ \Delta x(1 - \Delta y)u(m + 1,n) + \Delta x \Delta y\, u(m + 1,n + 1)$$

*where*

$\Delta x = x - m$
$\Delta y = y - n$

**16.** A method for extending a character region in an image, comprising the steps of:

receiving an input image;
classifying the input image into character blocks and background blocks, and converting pixels in the character blocks into pixels having a first brightness value and pixels in the background blocks into pixels having a second brightness value;
performing median filtering on the block-classified image to remove blocks erroneously classified as character blocks;

searching for left, right, top and bottom positions of a character region by horizontally and vertically scanning the median-filtered image, and determining a position of the character region;

extracting an image in the determined position of the character region from the input image; and

extending the extracted image of the character region to a size of the input image.

17. The method of claim 16, wherein the median filtering step comprises the step of determining isolated character blocks as erroneously classified character blocks.

18. A method for extending a character region in an image, comprising the steps of:

receiving an input image;

performing mean filtering on the input image to blur the input image;

classifying the mean-filtered image into character blocks and background blocks, and converting pixels in the background blocks into pixels having a first brightness value and pixels in the background blocks into pixels having a second brightness value;

performing median filtering on the block-classified image to remove blocks erroneously classified as character blocks;

searching for left, right, top and bottom positions of a character region by horizontally and vertically scanning the median-filtered image, and determining a position of the character region;

extracting an image in the determined position of the character region from the input image; and

extending the extracted image of the character region to a size of the input image.

19. A method for extending a character region in an image, comprising the steps of:

receiving an input image;

performing mean filtering on the input image to blur the input image;

classifying the mean-filtered image into character blocks and background blocks, and converting pixels in the character blocks into pixels having a first brightness value and pixels in the background blocks into pixels having a second brightness value;

subsampling pixels in the block-classified image to reduce the number of the pixels;

performing median filtering on the subsampled image to remove blocks erroneously classified as character blocks;

performing interpolating on the median-filtered image to extend the median-filtered image to a size of the input image;

searching for left, right, top and bottom positions of a character region by horizontally and vertically scanning the block-classified image, and determining a position of the character region;

extracting an image in the determined position of the character region from the input image; and

extending the extracted image of the character region to a size of the input image.

20. The method of claim 19, wherein the pixels are subsampled at a subsampling ratio of $(2:1)^2$.

FIG.1

INPUT
110

→ MEAN
FILTER
180

→ BLOCK
CLASSIFICATION
120

→ SUBSAMPLING
190

→ MEDIAN
FILTER
130

→ INTERPOLATION
195

→ POSITION
SEARCH
140

RECOGNITION
170

← ROC
EXTENSION
160

← ROC
EXTRACTION
150

FIG.2

EP 1 469 418 A2

| IMAGE DIVISION | → | DCT CONVERSION | → | ENERGY CALCULATION | $S^K$ | THRESHOLD CALCULATION | $C_{th}$ | CLASSIFICATION | CB or BB | BLOCK FILLING | → |

120

211     213     215     217     219     221

FIG.3

FIG.4A

FIG.4B

| | $D_1$ | $D_5$ | $D_6$ | | | | |
|---|---|---|---|---|---|---|---|
| $D_2$ | $D_4$ | $D_7$ | | | | | |
| $D_3$ | $D_8$ | | | | | | |
| $D_9$ | | | | | | | |
| | | | | | | | |
| | | | | | | | |
| | | | | | | | |
| | | | | | | | |

# FIG.4C

START

311

IMAGE RECEIVED?  NO

YES

BLOCK CLASSIFICATION —313

MEDIAN FILTERING —315

POSITION SEARCH —317

ROC EXTRACTION —319

ROC EXTENSION —321

RECOGNITION —323

END

FIG.5

START

311

IMAGE RECEIVED? — NO

YES

MEAN FILTERING — 312

BLOCK CLASSIFICATION — 313

SUBSAMPLING — 314

MEDIAN FILTERING — 315

INTERPOLATION — 316

POSITION SEARCH — 317

ROC EXTRACTION — 319

ROC EXTENSION — 321

RECOGNITION — 323

END

FIG.6

START

313

IMAGE DIVISION ~411

K ← 0 ~413

ACCESS BLOCK #K ~415

DCT CONVERSION ON BLOCK ~417

K ← K + 1 ~423

CALCULATE AND SAVE ENERGY DISTRIBUTION $S^K$ ~419

K = end of block? ~421 → NO

YES

CALCULATE THRESHOLD Cth BY AVERAGING $S^K$ VALUES ~425

K ← 0 ~427

ACCESS $S^K$ ~429

$S^K \geq$ Cth? ~431 → NO

YES

K ← K + 1 ~443

DETERMINED AS CHARACTER BLOCK ~433

DETERMINED AS BACKGROUND BLOCK ~437

CONVERT PIXELS IN CHARACTER BLOCKS INTO PIXELS WITH 1ST BRIGHTNESS VALUE ~435

CONVERT PIXELS IN BACKGROUND BLOCKS INTO PIXELS WITH 2ND BRIGHTNESS VALUE ~439

NO ← K = end of block? ~441

YES

RETURN

FIG.7

317

```
                    ┌─────────────┐
                    │    START    │
                    └──────┬──────┘
                           ▼
              ┌──────────────────────────┐
              │ RECEIVE MEDIAN-FILTERED   │──511
              │        IMAGE              │
              └──────────┬───────────────┘
                         ▼
              ┌──────────────────────────┐
              │      HSN ← 0              │──513
              │      VSN ← 0              │
              └──────────┬───────────────┘
                         ▼
              ┌──────────────────────────┐
              │  SCAN POSITION WITH HSN   │──515
              └──────────┬───────────────┘
                         ▼  517
                  ◇ CHARACTER REGION? ◇────NO────┐
                         │ YES                    │
   ┌──────────────┐   ┌──────────────────┐        │
   │ HCN ← HCN + 1│──523│ SAVE x COORDINATE│──519  │
   └──────┬───────┘   └────────┬─────────┘        │
          │                    ▼◄─────────────────┘
          │             ◇ end of HCN? ◇  521
          └──────NO─────┘       │ YES
                                ▼
              ┌──────────────────────────┐
              │ DETERMINE LEFT POSITION x₁│──525
              │ AND RIGHT POSITION x₂     │
              └──────────┬───────────────┘
                         ▼
              ┌──────────────────────────┐
              │  SCAN POSITION WITH VSN   │──527
              └──────────┬───────────────┘
                         ▼  529
                  ◇ CHARACTER REGIONS? ◇───NO────┐
                         │ YES                    │
   ┌──────────────┐   ┌──────────────────┐        │
   │ VCN ← VCN + 1│──535│ SAVE y COORDINATE│──531  │
   └──────┬───────┘   └────────┬─────────┘        │
          │                    ▼◄─────────────────┘
          │             ◇ end of VCN? ◇  533
          └──────NO─────┘       │ YES
                                ▼
              ┌──────────────────────────┐
              │ DETERMINE UPPER POSITION y₁│──537
              │ AND LOWER POSITION y₂     │
              └──────────┬───────────────┘
                         ▼
              ┌──────────────────────────┐
              │ DETERMINE (x₁,y₁) AND     │──539
              │ (x₂,y₂) OF CHARACTER REGION│
              └──────────┬───────────────┘
                         ▼
                    ┌─────────────┐
                    │     END     │
                    └─────────────┘
```

FIG.8

Input Image ~600

Mean Filtering ~610

Block Classification ~620

$(2:1)^2$ Subsampling ~630

Median Filtering ~640

$(2:1)^2$ Interpolation ~650

Scanning Horizontally & Vertically ~660

ROC POSITION SEARCHING ~670

$(x_1, y_1)$
$(x_2, y_2)$

ROC Extraction ~680

ROC Extension ~690

Output Image ~700

FIG.9

Fig. 10 A

Fig. 10 B

FIG.10C

FIG.10D

FIG.10E

FIG.10F

Fig. 10 G

Fig. 10 H